# EUROPEAN PATENT APPLICATION

(11) **EP 0 642 232 A1**
(43) Date of publication of application: **08.03.1995**
(21) Application number: 94202488.6
(22) Date of filing: 31.08.1994
(51) Int. Cl.: H04B 7/10

(54) **Radio communication system**

(30) Priority: 03.09.1993 GB 9318338
(71) Applicant: PHILIPS ELECTRONICS UK LIMITED, Croydon CR9 3QR (GB); PHILIPS ELECTRONICS N.V., 5621 BA Eindhoven (NL)
(72) Inventor: Saunders, Simon Reza, c/o Philips Telecom-P.M.R., Cambridge C84 1DP (GB)
(74) Representative: Moody, Colin James

(57) **Abstract**

A radio communication system comprises a primary station (1) including a transmitter (2) and receiver (26), and at least one secondary station (6) including a transmitter (7) and receiver (8). In order to reduce the deleterious effects of multipath propagation between the stations, at least the receiver (26) in the primary station is provided with an antenna (5) having at least three elements (12,14,16) in a non-planar configuration which elements are continuously coupled (24) to the receiver (26). The elements are arranged to have a low value of cross correlation to provide good reception diversity in a compact space.

## Description

The present invention relates to a radio communication system having particular, but not exclusive, application to a mobile radio communications system for use in built-up areas.

Contemporary radio communication systems which employ either a number of widely spaced secondary stations in communication with a primary station or at least one mobile station in communication with a primary station are known to be troubled by multiple communication paths between the stations. This phenomenon, known simply as 'multipath', is more pronounced in built-up areas and, in a mobile system, is compounded by the fact that the propagation path(s) between the primary station and the mobile station are constantly changing.

In an attempt to solve these problems, spatial diversity has been employed at the receiving antennas of the primary stations of such systems. Spatial diversity provides two or more antennas mutually spaced by 10 to 20 wavelengths or more at the operating frequency. The outputs of the antennas are combined with the aim of providing a sufficiently strong signal to the receiver regardless of the direction of signal arrival. The technique relies upon providing antennas having low values of cross-correlation. The main difficulty with spatial diversity is that, even at 900 MHz, an antenna spacing of 20 wavelengths is equivalent to 6 metres which is impossible to achieve at mobile stations and is usually difficult to achieve at primary station sites.

As an alternative solution, a mutually tilted antenna arrangement has been proposed in 'Base Station Polarization Diversity Reception for Mobile Radio' by Kozono et. al. in IEEE Transactions on Vehicular Technology Vol. VT-33, No.4 November 1984. This arrangement works on the principle that the propagation environment depolarises the signals so that if an incoming signal is weak in one plane, it will be comparatively strong in another plane orthogonal to it. The main drawback of that antenna arrangement is that there are always a pair of opposing azimuthal directions in which the antenna diversity provides no improvement whatsoever.

It is an object of the present invention to provide a radio communication system which ameliorates the disadvantages discussed above.

According to a first aspect of the present invention there is provided a radio communication system comprising a primary station and at least one secondary station, the primary station comprising transmitting means and receiving means and the at least one secondary station comprising transmitting means and receiving means, characterised in that the receiving means of the primary station is provided with an antenna arrangement comprising at least three antenna elements, the elements being arranged at substantially equal, non-zero angles to a first plane of the arrangement and arranged in a non-planar configuration, the arrangement further comprising means for simultaneously coupling the antenna elements to the receiving means.

The system in accordance with the invention permits the co-location of the antenna elements with good diversity performance for all azimuthal angles of signal arrival. Improved performance may be obtained by also separating the antenna elements in space and a worthwhile further improvement will be obtained using much smaller separations than the known spatial diversity arrangements, for example 5 wavelengths at the operating frequency. At 900MHz, 5 wavelengths corresponds to only 150 cm.

A wide variety of antenna types may be employed in a system according to the invention but better results will generally be obtained using omnidirectional types.

According to a second aspect of the present invention there is provided a transceiver comprising transmitting means and receiving means, the receiving means being provided with an antenna arrangement characterised by at least three antenna elements, the elements being arranged at substantially equal, non-zero angles to a first plane of the arrangement and arranged in a non-planar configuration, the arrangement further comprising means for simultaneously coupling the antenna elements to the receiving means.

This transceiver is suitable for use as either a primary station or a secondary station. When used as a primary station, the transceiver is conveniently provided with a receiving antenna arrangement comprising dipole elements to receive signals originating from beneath the antenna. When used as a mobile station in a vehicle, for example, is conveniently provided with a receiving antenna arrangement comprising monopole elements and which uses the body of the vehicle as a ground plane.

According to a third aspect of the present invention there is provided an antenna arrangement comprising at least three antenna elements, the elements being arranged at substantially equal, non-zero angles to a first plane of the arrangement and arranged in a non-planar configuration, the arrangement further comprising means for simultaneously coupling the antenna elements to an output of the arrangement.

An antenna arrangement in accordance with the present invention having three antenna elements has been found to give very good performance at low cost.

The present invention will now be described, by way of example, with reference to the accompanying drawings, in which:
Figure 1 shows a block schematic diagram of a radio communication system in accordance with the invention,
Figure 2 shows a perspective view of part of an antenna arrangement for use with the communication system,
Figure 3 shows a perspective view of part of an antenna arrangement using dipole elements,
Figure 4 shows a perspective view of part of another antenna arrangement using dipole elements,
Figure 5 shows two orthographic views of part of an antenna arrangement using loop elements,
Figure 6 shows a graph of correlation coefficients against orientation angle for three antenna elements arranged in accordance with the present invention,
Figure 7 shows a graph of correlation coefficient against orientation for a single antenna element showing the variation with cross polarisation coefficient,
Figure 8 shows a graph of correlation coefficients against tilt angle for three antenna elements, and
Figure 9 shows the statistics of a maximal-ratio combined signal.

In the Figures the same reference numerals have been used to denote corresponding features.

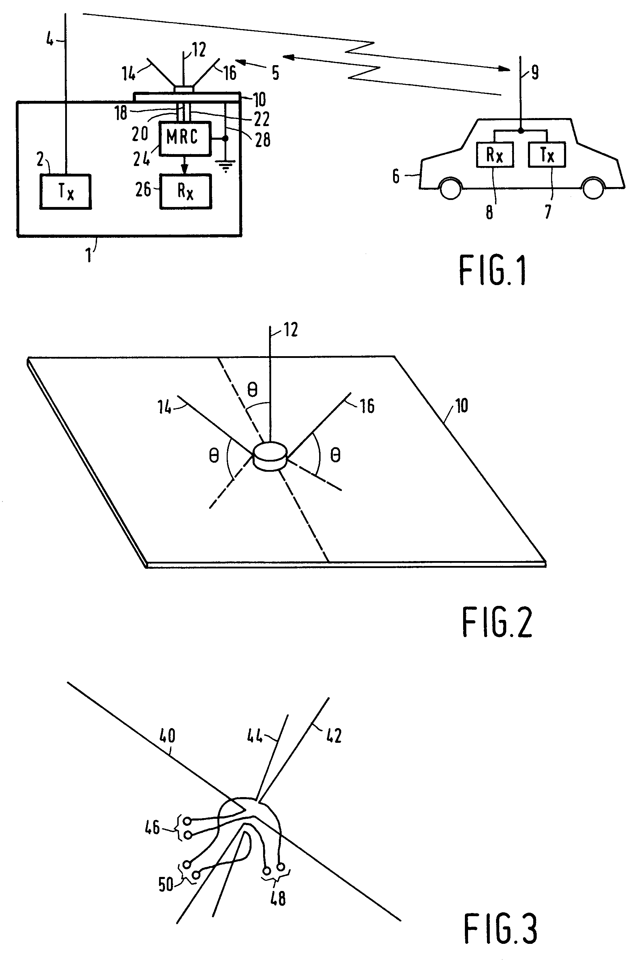

Figure 1 shows a communication system in accordance with the present invention including a primary station 1 and a secondary station 6. The primary station comprises a transmitter 2 and a receiver 26 connected to antennas 4 and 5 respectively. The primary station 1 is in communication with the at least one secondary station 6, shown here as a mobile station. The station 6 comprises a transmitter 7 and a receiver 8 connected to a common antenna 9. The transmitter 2, antenna 4 and secondary station 6 operate in a conventional manner. The antenna 5 is arranged to provide polarisation diversity for the signal received by the primary station to ameliorate the effects of multipath propagation. The antenna 5 comprises three monopole antenna elements 12, 14, 16 in a configuration described in more detail with reference to Figure 2 below. The elements 12, 14, 16 are coupled to a maximal-ratio combiner (MRC) 24 by respective couplings 18, 20, 22. The MRC 24 provides a single, maximally combined signal to the receiver 26. The MRC is also connected to a ground plane 10 arranged beneath the antenna via earth connection 28. The MRC operates to weight and cophase the signals from the three antenna elements before combining them and will generally operate at IF or baseband as is known. Maximal-ratio combining is described in W. C. Y. Lee, 'Mobile Communications Engineering' see particularly page 304 in the chapter on Combining Systems. The polarisation diversity antenna 5 could also be applied to the receiver at the secondary station. Such a secondary station could, of course, be provided with a spatial diversity antenna system as is known.

Figure 2 shows a perspective view of the antenna shown in Figure 1, comprising a ground plane 10 and three monopole antenna elements 12, 14, 16. The antenna elements are each mounted at an angle theta to the ground plane and extend radially from the centre of the antenna. The elements project onto the ground plane at equal angles to their neighbouring elements. Thus, for a three element arrangement, the elements project onto the ground plane at 120 degrees from each other. Where the antenna is to be mounted on a vehicle, the vehicle body may conveniently be used to provide the ground plane.

Figure 3 shows an antenna arrangement comprising three dipole elements 40, 42, 44 arranged to be mutually orthogonal in space. The dipole elements are substantially co-located at their centres to provide a compact arrangement in which the elements subtend equal angles with an imaginary plane that passes through one end of each of the three elements. The Figure also shows the respective connections 46, 48, 50 to the three antenna elements which would be coupled in use to a MRC in a similar manner to that shown in Figure 3.

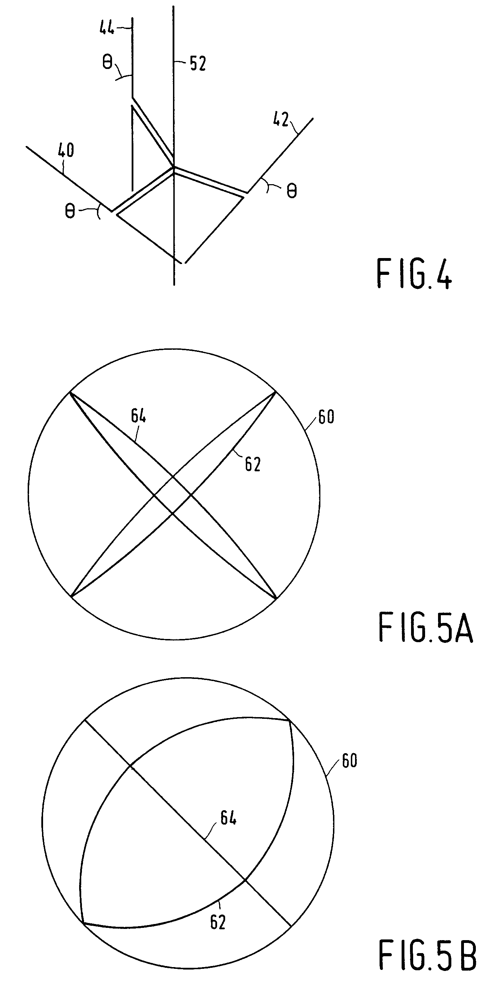

Figure 4 shows the three dipole elements 40, 42, 44 mounted on a mast 52. The elements are arranged at some distance from the mast to provide a degree of spatial diversity as well as polarisation diversity. The elements are arranged at an angle phi to a plane orthogonal to the mast 52. Connection to an MRC should be made as before.

Figures 5A and 5B show part of an antenna arrangement which utilises three mutually insulated loop elements 60, 62, 64. Loop elements may be particularly advantageous at low frequencies where dipole or monopole antennas are rather large. Figure 5A is a side view at one azimuthal angle and Figure 5B is a side view at another azimuthal angle 30 degrees from the first. A very compact arrangement is realised by locating the loops substantially concentrically and in mutually orthogonal planes to define a hollow ball. This arrangement may be easier to visualise if each of the dipole elements in Figure 3 is considered instead to be the axis of one of the loop elements. Conventional feed arrangements are used and are omitted from the Figure for clarity. The elements should be connected to a maximal-ratio combiner (not shown) in a similar manner to that shown in Figure 1.

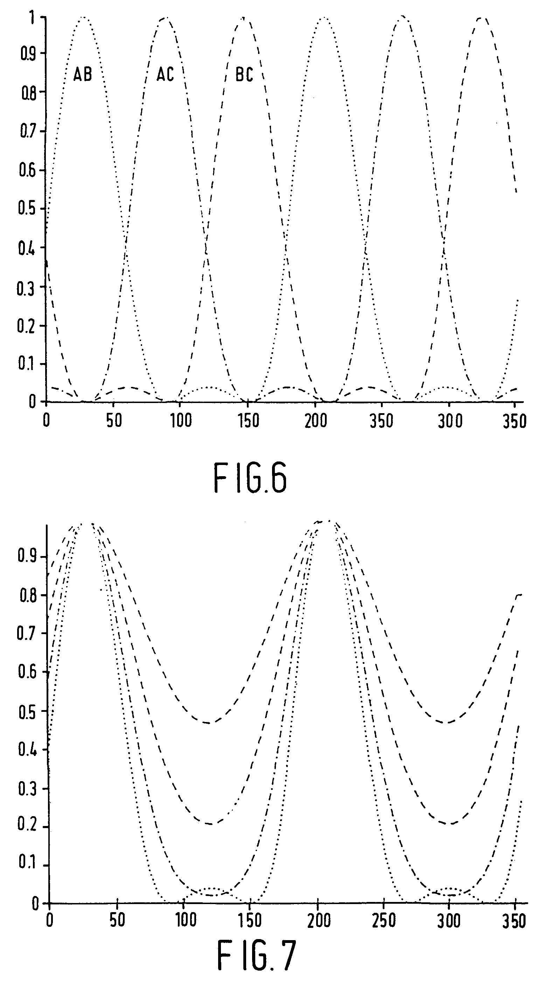

For an antenna arrangement comprising three equiangularly spaced dipole elements (for example as shown in Figure 3) the degree of correlation between the signals received at any two of the three elements from any azimuthal angle of arrival can readily be determined from trigonometry. Figure 6 shows a graph of normalised signal envelope correlation coefficient on the vertical axis against azimuthal angle of arrival on the horizontal axis for three pairs of antenna elements AB, AC, BC. The strength of the vertical and horizontal polarisations of the signal are assumed to be equal. As would be expected, the graph is symmetrical about 180 degrees. For any azimuthal angle of arrival, at least one of the three correlation coefficients is below approximately 0.05. In addition, when one of the coefficients is at its maximum the other two are at their minimum. This behaviour illustrates that there should be useful polarisation diversity performance whatever the azimuthal angle of arrival of the incoming signals.

The effectiveness of the antenna polarisation diversity is dependent upon the degree of cross polarisation discrimination of the signal, which is defined as the ratio of the powers of the vertically and horizontally polarised field components. The cross polarisation discrimination is determined by the propagation environment and is dependent to some degree on the path length. In most cases the cross polarisation discrimination will lie in the range 0 to 9 dB and Figure 7 shows a graph of the effect of the variation of this parameter upon the correlation coefficient between a pair of antenna elements. The curves correspond, from highest to lowest, with values of cross polarisation discrimination of 9dB, 6dB, 3dB and 0dB respectively. From this graph it can be seen that even for the worst case of 9 dB, at least one correlation coefficient can be expected to be below 0.5 with a value of 0.3 being more typical.

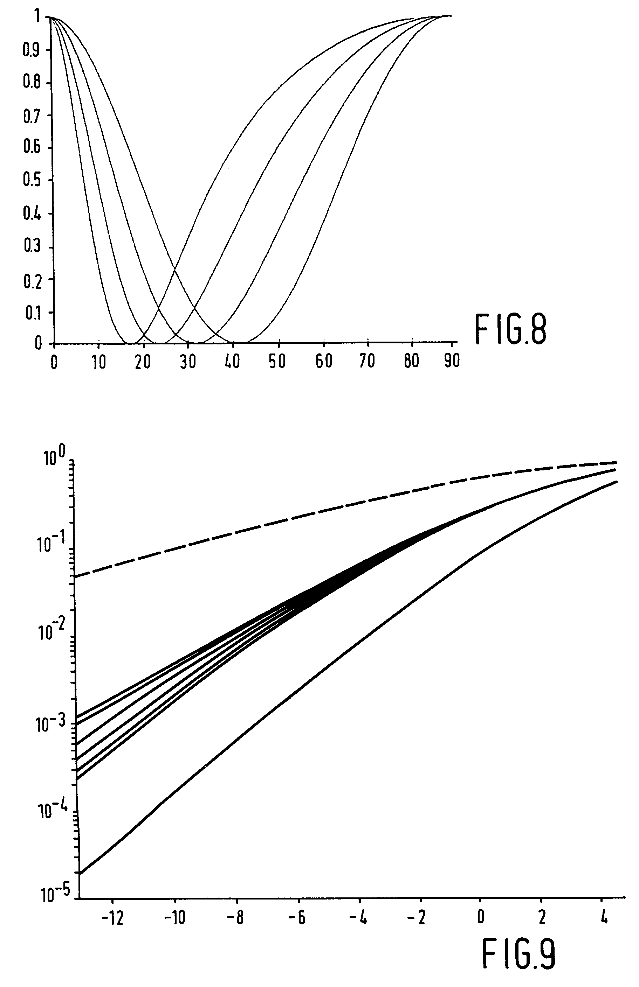

The angle of the antenna elements to an imaginary plane passing through one end of each of the elements (the angle of tilt) also has an effect on the correlation coefficient. Figure 8 shows a graph of element tilt on the horizontal axis against correlation coefficient on the vertical axis. The correlation coefficient is taken between two elements at the optimum azimuthal angle of arrival for those two elements. The correlation coefficient is dependent upon the cross polarisation discrimination and the curves in Figure 8 correspond, from left to right, with values of cross polarisation discrimination of 9dB, 6dB, 3dB and 0 dB respectively.

From this graph it can be seen that there is no ideal value for element tilt since the optimum value depends upon the cross polarisation discrimination which is constantly varying. A good compromise is somewhere in the range 30 to 40 degrees and, providentially, the angle of tilt subtended by three mutually perpendicular dipole elements as illustrated in Figure 3 is approximately 35 degrees.

Figure 9 shows a graph of the calculated performance of the antenna arrangement shown in Figure 3 with a signal cross polarisation discrimination of 0 dB. The vertical axis is the probability of the signal-to-noise ratio (SNR) from the antenna arrangement being less than the SNR relative to mean for one vertical element which is given in dB on the horizontal axis. The highest curve gives a comparison for one branch of the arrangement and the lowest curve gives a comparison for three uncorrelated vertical elements (in other words the theoretically perfect case). The remaining curves show, from top to bottom, the distribution of the instantaneous SNR in each branch for azimuthal angles of arrival of 30, 25, 20, 15, 10, 5 and 0 degrees respectively. For values of angle outside of this range, the values of SNR repeat. It can be seen that there is only very slight dependence upon the azimuthal angle of arrival of the incoming signal indicating that the arrangement is useful as a polarisation diversity antenna. Comparison with the statistics for a single branch antenna gives an indication of the degree of diversity gain which has been achieved.

A radio communication system in accordance with the invention can readily be provided with an antenna arrangement having a greater number of elements to provide improved performance. However, three has been found to be an excellent compromise between cost and performance.

From reading the present disclosure, other modifications will be apparent to persons skilled in the art. Such modifications may involve other features which are already known in the design, manufacture and use of radio communication systems and component parts thereof and which may be used instead of or in addition to features already described herein. Although claims have been formulated in this application to particular combinations of features, it is to be understood that the scope of the disclosure of the present application also includes any novel feature or combination of features disclosed herein either explicitly or implicitly or any generalisation thereof, whether or not it relates to the same invention as presently claimed in any claim and whether or not it mitigates any or all of the same technical problems as does the present invention. The applicants hereby give notice that new claims may be formulated to such features and/or combinations of features during the prosecution of the present application or of any application derived therefrom.

## Claims

1. A radio communication system comprising a primary station and at least one secondary station, the primary station comprising transmitting means and receiving means and the at least one secondary station comprising transmitting means and receiving means, characterised in that the receiving means of the primary station is provided with an antenna arrangement comprising at least three antenna elements, the elements being arranged at substantially equal, non-zero angles to a first plane of the arrangement and arranged in a non-planar configuration, the arrangement further comprising means for simultaneously coupling the antenna elements to the receiving means.

2. A radio communication system as claimed in Claim 1, characterised in that the antenna elements comprise dipole elements.

3. A radio communication system as claimed in Claim 1 or Claim 2, characterised in that the antenna elements are located apart to additionally provide space diversity reception.

4. A transceiver comprising transmitting means and receiving means, the receiving means being provided with an antenna arrangement characterised by at least three antenna elements, the elements being arranged at substantially equal, non-zero angles to a first plane of the arrangement and arranged in a non-planar configuration, the arrangement further comprising means for simultaneously coupling the antenna elements to the receiving means.

5. A transceiver as claimed in Claim 4, characterised in that the antenna arrangement comprises dipole antenna elements.

6. A transceiver as claimed in Claim 4, characterised in that the antenna arrangement comprises monopole antenna elements.

7. An antenna arrangement comprising at least three antenna elements, the elements being arranged at substantially equal, non-zero angles to a first plane of the arrangement and arranged in a non-planar configuration, the arrangement further comprising means for simultaneously coupling the antenna elements to an output of the arrangement.

8. An antenna arrangement as claimed in Claim 7, characterised in that the antenna arrangement comprises three antenna elements.

9. An antenna arrangement as claimed in Claim 7 or Claim 8, characterised in that the antenna elements comprise dipole elements.

10. An antenna arrangement as claimed in Claim 7 or Claim 8, characterised in that the antenna elements comprise loop elements.
